# EUROPÄISCHE PATENTANMELDUNG

(11) **EP 2 826 991 A1**
(43) Veröffentlichungstag der Anmeldung: **21.01.2015**
(21) Anmeldenummer: 14167887.0
(22) Anmeldetag: 12.05.2014
(51) Int. Cl.: F03D 1/00, F03D 1/06

(54) **Rotornabe einer Windkraftanlage**

(30) Priorität: 18.07.2013 DE 102013214133
(71) Anmelder: Siemens Aktiengesellschaft, 80333 München (DE)
(72) Erfinder: Ebbesen, Henning, 6900 Skjern (DK); Munk-Hansen, Thorkil, 7323 Give (DK)

(57) **Zusammenfassung**

Die Erfindung betrifft eine Rotornabe einer Windkraftanlage.

Eine Rotornabe einer Windkraftanlage beinhaltet mindestens zwei Verbindungsstellen zur Aufnahme jeweils eines Rotorblatts. Die Rotornabe ist von einer Verkleidung umgeben, wobei die Verkleidung mindestens zwei Aussparungen für jeweils ein Rotorblatt aufweist. Zwischen den zwei Verbindungsstellen zur Aufnahme der Rotorblätter ist der Abstand zwischen der Rotornabenverkleidung und der Rotornabe so gestaltet, dass zwischen Rotornabenverkleidung und Rotornabe ein Hohlraum entsteht, der groß genug ist, damit von dort aus Wartungsarbeiten an der Verbindungsstelle zwischen Rotorblatt und Rotornabe von einem Arbeiter durchführbar sind.

## Beschreibung

Die Erfindung betrifft eine Rotornabe einer Windkraftanlage.

Eine Windkraftanlage beinhalten mindestens zwei Rotorblätter, die an einer Rotornabe befestigt ist. Die Rotornabe ist drehbar an der Kanzel der Windkraftanlage angebracht. Die Kanzel der Windkraftanlage ist drehbar auf einem Turm angeordnet.

Ein Rotorblatt ist über ein Lager mit der Rotornabe verbunden, so dass es um seine Längsachse drehbar ist. Die Rotornabe weist mindestens zwei Aufnehmungen für Rotorblätter auf.

Die Rotornabe einer Windkraftanlage ist meist als ein Gussteil gefertigt. Sie weist eine Verbindungsstelle zur Befestigung an der Kanzel der Windkraftanlage auf.

Die Rotornabe ist mit einer Verkleidung versehen. Diese dient zum Schutz der Rotornabe und verschiedener Aggregate, die an der Rotornabe befestigt sind, vor Witterungseinflüssen. Zusätzlich dient die Rotornabenverkleidung optischen Zwecken, sie verdeckt die Rotornabe und eventuell vorhandene Aggregate.

Im Rahmen der Wartung einer Windkraftanlage werden auch Arbeiten an der Befestigung und den Lagern der Rotorblätter durchgeführt. Hierbei kann es sich um eine Inspektion, um das Nachziehen von Bolzen oder um das Austauschen einer Dichtung handeln.

Diese Arbeiten werden teilweise von außerhalb der Rotornabe durchgeführt. Dazu ist es notwendig, dass ein Arbeiter die Kanzel der Windkraftanlage verlässt, und die Wartungsarbeiten außen an der installierten Rotornabe durchführt. Arbeiten dieser Art bergen für den Arbeiter ein hohes Sicherheitsrisiko.

Es ist daher die Aufgabe der vorliegenden Erfindung eine Anordnung einer Rotornabe und einer Rotornabenverkleidung vorzustellen, die das Sicherheitsrisiko für den Arbeiter minimiert.

Die Aufgabe wird gelöst durch die Kombination der Merkmale im unabhängigen Anspruch. Bevorzugte Ausführungsformen werden in den Unteransprüchen beschrieben.

Eine Rotornabe einer Windkraftanlage beinhaltet mindestens zwei Verbindungsstellen zur Aufnahme jeweils eines Rotorblatts. Die Rotornabe ist von einer Verkleidung umgeben, wobei die Verkleidung mindestens zwei Aussparungen für jeweils ein Rotorblatt aufweist. Zwischen den zwei Verbindungsstellen zur Aufnahme der Rotorblätter ist der Abstand zwischen der Rotornabenverkleidung und der Rotornabe so gestaltet, dass zwischen Rotornabenverkleidung und Rotornabe ein Hohlraum entsteht, der groß genug ist, damit von dort aus Wartungsarbeiten an der Verbindungsstelle zwischen Rotorblatt und Rotornabe von einem Arbeiter durchführbar sind.

Eine Windkraftanlage enthält mindestens zwei Rotorblätter. Diese Rotorblätter sind an der Rotornabe angebracht. Dazu sind an der Rotornabe Verbindungsstellen zur Aufnahme eines Rotorblatts vorgesehen. Die Rotornabe ist von einer Rotornabenverkleidung umgeben. Diese Rotornabenverkleidung weist mindestens zwei Aussparungen auf, durch die die Rotorblätter an der Rotornabe montiert sind.

Zur Verbindung der Rotorblätter mit der Rotornabe ist eine Befestigung mittels Befestigungsmittel vorgesehen. Ein Rotorblatt ist über ein Lager mit der Nabe verbunden.

Sowohl an den Befestigungsmitteln als auch an dem Lager müssen Wartungsarbeiten durchgeführt werden. Dazu muss die Verbindungsstelle zwischen Rotorblatt und Rotornabe für Wartungsarbeiten zugänglich sein.

Der Abstand zwischen der Rotornabenverkleidung und der Rotornabe ist zwischen zwei Verbindungsstellen zur Aufnahme der Rotorblätter so gestaltet, dass sich zwischen der Rotornabe und der Rotornabenverkleidung ein Hohlraum bildet. Dieser Hohlraum ist so gestaltet, dass er groß genug ist, dass die Wartungsarbeiten an der Verbindungsstelle zwischen Rotorblatt und Rotornabe von diesem Hohlraum aus von einem Arbeiter durchführbar sind.

Dadurch können die Wartungsarbeiten von dem Hohlraum zwischen Rotornabenverkleidung und Rotornabe aus durchgeführt werden. Damit kann der Arbeiter der die Wartungsarbeiten durchführt diese von innerhalb der Rotornabenverkleidung aus durchführen.

Dadurch ist es nicht mehr notwendig, dass der Arbeiter die Rotornabenverkleidung verlassen muss und von außerhalb der Rotornabe die Wartungsarbeiten an der Verbindungsstelle der Rotorblätter zur Rotornabe durchführt. Damit sind die Wartungsarbeiten unabhängig von witterungsbedingten Einflüssen. Außerdem wird das Sicherheitsrisiko des Arbeiters, der die Wartungsarbeiten durchführt, deutlich reduziert.

Die Rotorblätter sind mittels Befestigungsmitteln an der Rotornabe angebracht. Die Befestigungsmittel sind vom Hohlraum zwischen Rotornabe und Rotornabenverkleidung aus zugänglich.

Damit können Wartungsarbeiten an den Befestigungsmitteln von dem Hohlraum zwischen Rotornabe und Rotornabenverkleidung aus durchgeführt werden. Damit ist es nicht notwendig, dass der Arbeiter, der die Wartungsarbeiten durchführt, die Rotornabe verlässt und die Wartungsarbeiten von außerhalb der Rotornabenverkleidung aus durchführt.

Als Befestigungsmittel zur Befestigung der Rotorblätter an der Rotornabe können Bolzen vorgesehen sein, die im Rahmen regelmäßiger Wartungsarbeiten überprüft oder nachgezogen werden müssen.

Die Rotorblätter sind über Lager mit der Rotornabe verbunden. Die Lager sind vom Hohlraum zwischen Rotornabe und Rotornabenverkleidung aus zugänglich.

Damit können Wartungsarbeiten, die an den Lagern durchgeführt werden müssen, vom Hohlraum zwischen Rotornabe und Rotornabenverkleidung aus durchgeführt werden.

Als Lager zur Lagerung der Rotorblätter können Kugellager oder Wälzlager verwendet werden. Die Wartungsarbeiten an diesen Lagern können die Überprüfung der Lager, die Überprüfung von Dichtungen der Lager, die Reinigung der Lager von austretendem Fett, sowie das Befüllen und das Entleeren von Vorratsbehältern mit Fett sein.

Für die Durchführung dieser Wartungsarbeiten ist es nicht mehr notwendig, dass ein Arbeiter die Windkraftanlage verlässt und die Wartungsarbeiten von außerhalb der Rotornabenverkleidung aus durchführt. Damit sind die Wartungsarbeiten unabhängig von witterungsbedingten Einflüssen und das Sicherheitsrisiko für den Arbeiter, der die Wartungsarbeiten durchführt, ist deutlich reduziert.

Der Hohlraum zwischen Rotornabenverkleidung und Rotornabe ist für einen Arbeiter von dem Ende der Rotornabe aus zugänglich, das dem Ende entgegengesetzt ist, das zur Befestigung an einer Kanzel einer Windkraftanlage vorgesehen ist.

Die Rotornabe einer Windkraftanlage weist ein Ende auf, das zur Befestigung an der Kanzel der Windkraftanlage vorgesehen ist. Am gegenüberliegenden Ende der Rotornabe ermöglicht eine Öffnung im Gussteil der Rotornabe den Zugang zum Zwischenraum zwischen Rotornabe und Rotornabenverkleidung. Von dort aus ist es einem Arbeiter möglich, den Hohlraum zwischen Rotornabenverkleidung und Rotornabe zu erreichen, von dem aus die Wartungsarbeiten an den Befestigungsmitteln und Lagern der Rotorblätter durchgeführt werden können.

Durch einen Zugang im Ende der Rotornabe, das dem Ende entgegengesetzt ist, das zur Befestigung der Rotornabe an der Kanzel der Windkraftanlage vorgesehen ist, ist der Zugang zum Hohlraum zwischen Rotornabenverkleidung und Rotornabe unabhängig von der Stellung der Rotornabe im Raum nach einer Drehung um die Rotationsachse.

Die Öffnung in der Rotornabe an diesem Ende der Rotornabe ändert Ihre Lage bei der Drehung der Rotornabe nicht. Damit ist der Hohlraum zwischen Rotornabenverkleidung und Rotornabe für den Arbeiter von innerhalb der Rotornabe aus zugänglich, ohne dass er die Rotornabenverkleidung verlassen muss. Der Zugang zu diesem Hohlraum ist in immer gleicher Lage zugänglich.

Der Abstand zwischen der Rotornabenverkleidung und der Rotornabe wird mit abnehmendem Abstand zu einer Verbindungsstelle zur Aufnahme eines Rotorblattes geringer. Dies bewirkt, dass ein ausreichend großer Hohlraum zwischen der Rotornabenverkleidung und der Rotornabe gebildet wird, so dass ein Arbeiter die Wartungsarbeiten durchführen kann, wobei gleichzeitig die Rotornabenverkleidung zum Rand der Ausnehmung die zur Aufnahme eines Rotorblattes vorgesehen ist, näher an die Rotornabe herankommt.

Die Rotornabe erhält damit ein schlankeres Aussehen. Der Raum für die Wartungsarbeiten wird optimiert, ohne dass sich die aerodynamischen Eigenschaften der Rotornabenverkleidung negativ auf die Energieproduktion der Windkraftanlage auswirken. Diese Form führt zur Ausbildung von Erhöhungen zwischen den Aussparungen, die zur Aufnahme der Rotorblätter vorgesehen sind.

Die Rotornabe weist eine Rotationsachse auf, und die Rotornabenverkleidung weist an dem Ende einen kreisförmigen Querschnitt um die Rotationsachse auf, das dem zur Befestigung an einer Kanzel einer Windkraftanlage vorgesehenen Ende der Rotornabe entgegengesetzt ist.

Die Rotornabe einer Windkraftanlage weist eine Rotationsachse auf. Diese Rotationsachse ist identisch mit der späteren Drehachse der Rotornabe im Betrieb der Windkraftanlage. Die Rotornabe der Windkraftanlage weist ein Ende auf, das zur Befestigung an der Kanzel einer Windkraftanlage vorgesehen ist.

Am gegenüberliegenden Ende der Rotornabe weist die Rotornabenverkleidung einen kreisförmigen Querschnitt um die Rotationsachse auf. Die Rotornabe kann damit durch eine rotationssymmetrische Abdeckung verschossen werden.

Der Querschnitt der Rotornabenverkleidung ist an den axialen Enden der Rotornabenverkleidung kreisförmig. Die Rotornabe weist ein Ende auf, das zur späteren Montage an der Kanzel der Windkraftanlage vorgesehen ist und ein Ende, das dem Ersten gegenüberliegt.

Die Rotornabenverkleidung weist an beiden Enden einen kreisförmigen Querschnitt um die Rotationsachse auf. Damit kann an den Enden eine rotationssymmetrische Dichtung bzw. ein rotationssymmetrischer Übergang zur Abdeckung bzw. zur Kanzel vorgesehen werden.

Außerdem erhält die Rotornabenverkleidung damit eine in der Rotation aerodynamisch neutralere Form.

Zwischen der Form der Rotornabenverkleidung an den axialen Enden der Rotornabe und der Form der Oberfläche der Rotornabe zwischen den Verbindungsstellen zur Aufnahme der Rotorblätter ist ein kontinuierlicher Übergang ausgebildet. Damit gehen die Erhöhungen der Rotornabenverkleidung, über dem Hohlraum für Wartungsarbeiten, kontinuierlich in den kreisförmigen Querschnitt der Rotornabenverkleidung an deren Enden über. Damit wird die Form der Rotornabenverkleidung aerodynamisch optimiert und deren Einfluss auf die Energieproduktion der Windkraftanlage minimiert.

Die Rotornabe beinhaltet drei Verbindungsstellen zur Aufnahme eines Rotorblattes.

Damit kann eine Bauform der Windkraftanlage mit drei Rotorblättern erreicht werden. Diese Bauform der Windkraftanlage gewährleistet die optimale Ausnutzung des Windes und einen gleichmäßigen Kraftaufwand bei der Drehung der Kanzel auf dem Turm im Betrieb der Windkraftanlage.

Die Rotornabenverkleidung weist Aussparungen für drei Rotorblätter auf. Damit ist die Rotornabenverkleidung für eine Rotornabe zur Aufnahme von drei Rotorblättern vorgesehen.

Die Erfindung wird im Folgenden mit mehr Detail in Figuren dargestellt. Die Figuren zeigen eine bevorzugte Ausführungsform. Die Erfindung ist allerdings nicht auf diese bevorzugte Ausführungsform begrenzt.
- Figur 1: zeigt eine Windkraftanlage,
- Figur 2: zeigt die Rotornabe einer Windkraftanlage,
- Figur 3: zeigt eine weitere Ansicht der Rotornabe,
- Figur 4: zeigt eine Seitenansicht der Rotornabenverkleidung,
- Figur 5: zeigt eine perspektivische Ansicht der Rotornabenverkleidung,
- Figur 6: eine zweite Ansicht der Windenergieanlage.

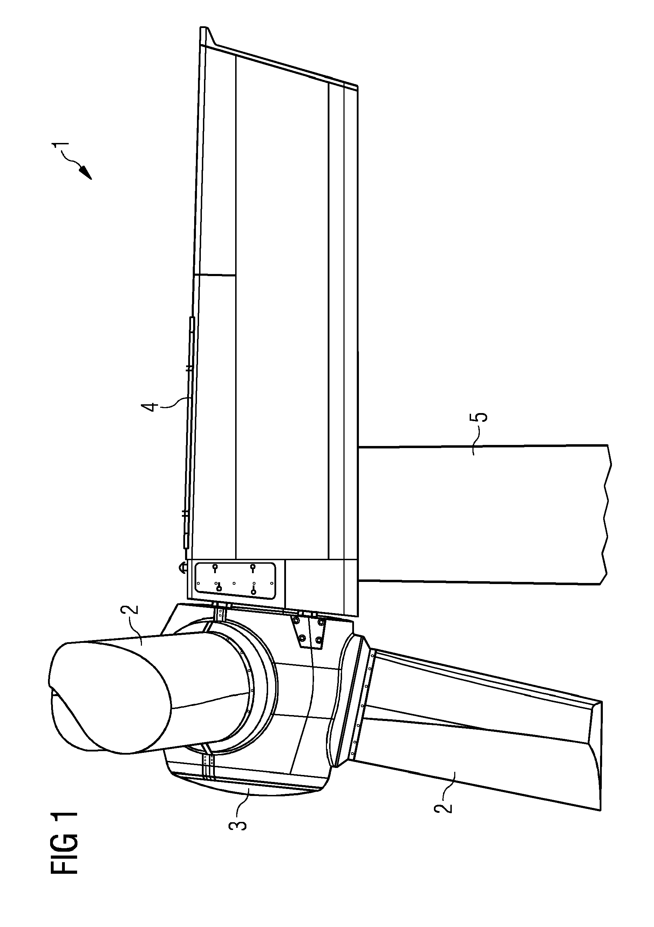

Figur 1 zeigt eine Windkraftanlage.

Figur 1 zeigt eine Windkraftanlage 1. Die Windkraftanlage 1 beinhaltet eine Kanzel 4, die auf einem Turm 5 drehbar angeordnet ist. Eine Rotornabe 3 ist drehbar an der Kanzel 4 angebracht. Mindestens zwei Rotorblätter 2 sind an der Rotornabe 3 befestigt. Im Betrieb der Windenergieanlage 1 wirkt der Wind auf die Rotorblätter 2, diese versetzen die Rotornabe 3 in Drehung. Die Rotorblätter 2 sind so an der Rotornabe 3 angebracht, dass sie um ihre Längsachse drehbar sind.

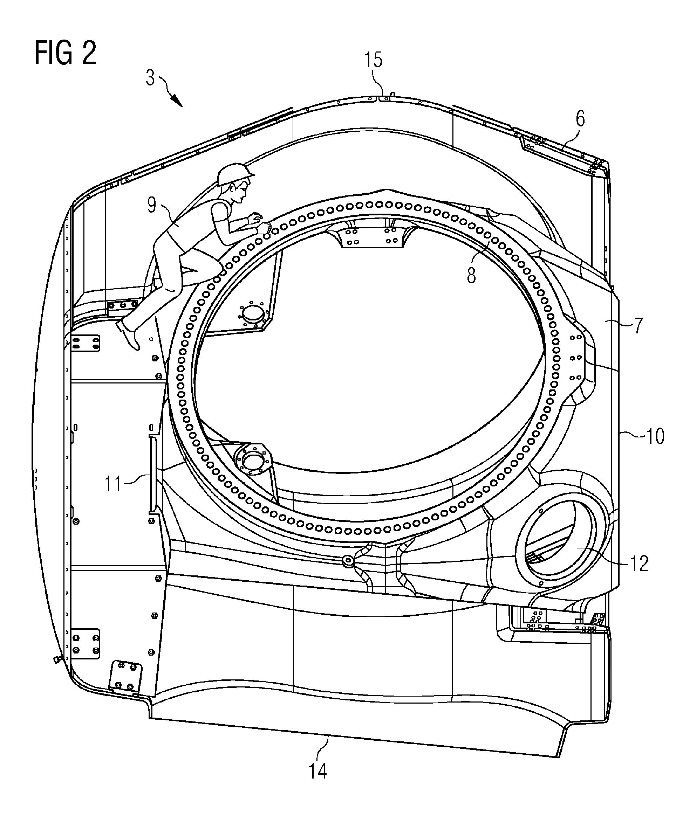

Figur 2 zeigt die Rotornabe einer Windkraftanlage.

Figur 2 zeigt die Rotornabe 3 einer Windkraftanlage. Die Rotornabe 3 besteht aus einem Gussteil 7. Das Gussteil 7 weist einen Flansch 8 auf, der zur Aufnahme eines Rotorblattes vorgesehen ist. Das Gussteil 7 der Rotornabe ist von einer Rotornabenverkleidung 6 umgeben.

Die Rotornabe 7 weist mindestens zwei Flansche 8 zur Aufnahme von Rotorblättern auf. Zwischen den zwei Flanschen 8 und der Rotornabe 7 ist der Abstand zwischen der Rotornabe und der Rotornabenverkleidung 6 so ausgebildet, dass Wartungsarbeiten an den Verbindungsstellen der Rotorblätter mit der Rotornabe 7 von einem Arbeiter 9 vom Hohlraum zwischen der Rotornabe 7 und der Rotornabenverkleidung 6 aus durchführbar sind.

Dazu weist die Rotornabenverkleidung 6 eine Erhöhung 15 oberhalb des Hohlraums für Wartungsarbeiten auf. Der Hohlraum für Wartungsarbeiten zwischen der Rotornabe 7 und der Rotornabenverkleidung 6 ist für den Arbeiter 9 vom Ende 11 der Rotornabe 7 aus zugänglich.

Der Zugang zum Hohlraum für Wartungsarbeiten, im Abstand zwischen der Rotornabe 7 und der Rotornabenverkleidung 6, kann auch durch ein Mannloch 12 in der Rotornabe 7 hergestellt werden.

Die Rotornabe 7 weist ein Ende 10 auf, an den die Rotornabe 7 zur Befestigung an einer Kanzel einer Windkraftanlage vorgesehen ist. Das Ende 10 der Rotornabe liegt im Ende 11 der Rotornabe gegenüber.

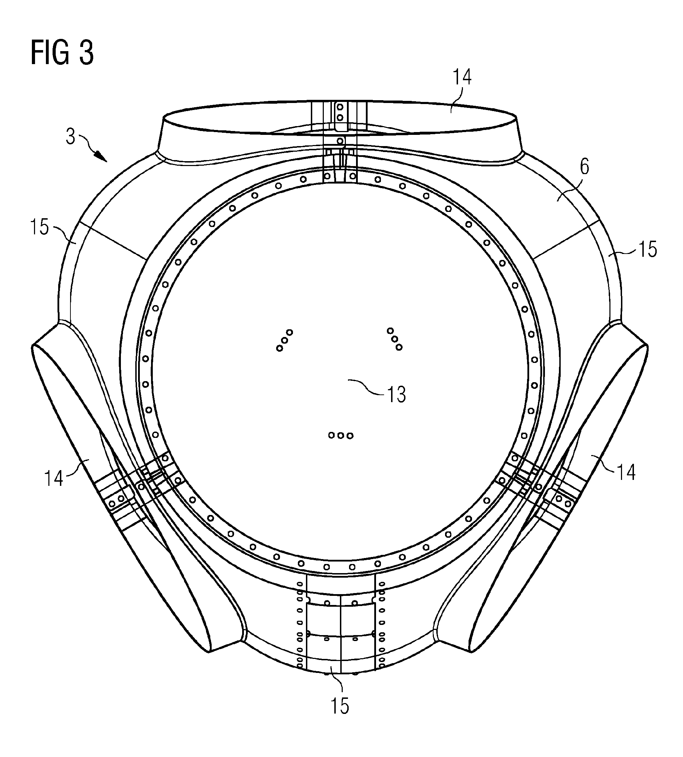

Figur 3 zeigt eine weitere Ansicht der Rotornabe.

Figur 3 zeigt eine weitere Ansicht der Rotornabe 3 auf das Ende 11 der Rotornabe. Die Rotornabe weist eine Rotornabenverkleidung 6 auf. Die Rotornabenverkleidung 6 zeigt drei Aussparungen 14 zur Aufnahme eines Rotorblattes.

Die Rotornabenverkleidung 6 zeigt eine runde Abdeckung 13 über dem Ende 11 der Rotornabe. Im Bereich zwischen den Aussparungen zur Aufnahme der Rotorblätter 14 zeigt die Rotornabenverkleidung 6 eine Erhöhung 15 die sich oberhalb des Hohlraums für Wartungsarbeiten befindet.

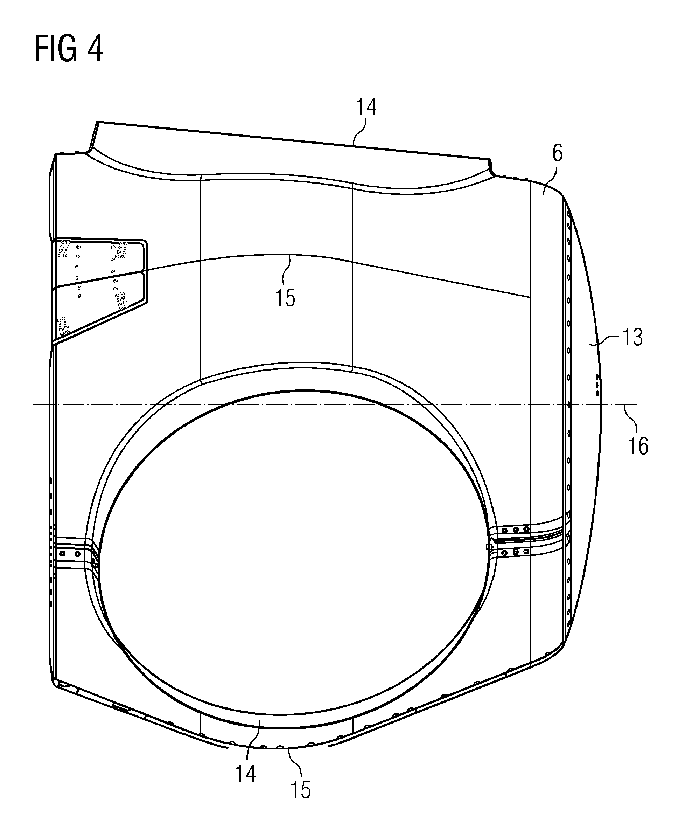

Figur 4 zeigt eine Seitenansicht der Rotornabenverkleidung.

Figur 4 zeigt eine Seitenansicht der Rotornabenverkleidung 6. Die Rotornabe 7 und auch die Rotornabenverkleidung 6 weisen eine Rotationsachse 16 auf, die der Rotationsachse der Rotornabe 7 im späteren Betrieb der Windkraftanlage entspricht.

Die Rotornabenverkleidung 6 enthält eine Abdeckung 13 vor dem Ende 11 der Rotornabe 7. Die Rotornabenverkleidung 6 weist Aussparungen 14 zur Aufnahme der Rotorblätter auf. Über dem Hohlraum für Wartungsarbeiten zwischen der Rotornabenverkleidung 6 und der Rotornabe 7 bildet die Rotornabenverkleidung 6 Erhöhungen 15 aus.

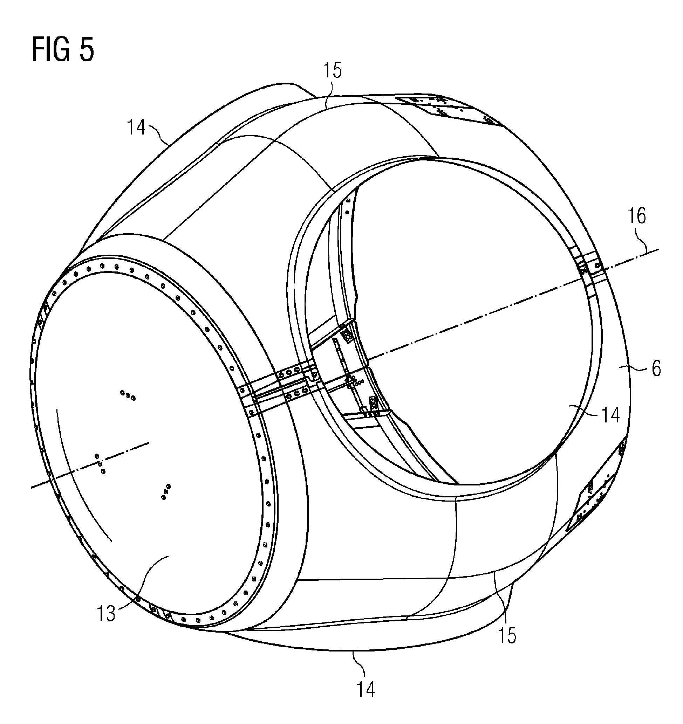

Figur 5 zeigt eine perspektivische Ansicht der Rotornabenverkleidung.

Figur 5 zeigt eine perspektivische Ansicht der Rotornabenverkleidung 6. Die Rotornabenverkleidung 6 zeigt eine Abdeckung 13, die sich oberhalb des Endes 11 der Rotornabe 7 befindet. Außerdem weist die Rotornabenverkleidung 6 Aussparungen 14 auf, die zur Aufnahme von Rotorblättern dienen.

Die Erhöhungen 15 befinden sich oberhalb des Hohlraums für Wartungsarbeiten zwischen der Rotornabe 7 und der Rotornabenverkleidung 6. Die Rotornabenverkleidung 6 weist an den Enden 10 und 11 an der Rotornabe 7 kreisförmige Querschnitte um die Rotationsachse 16 auf.

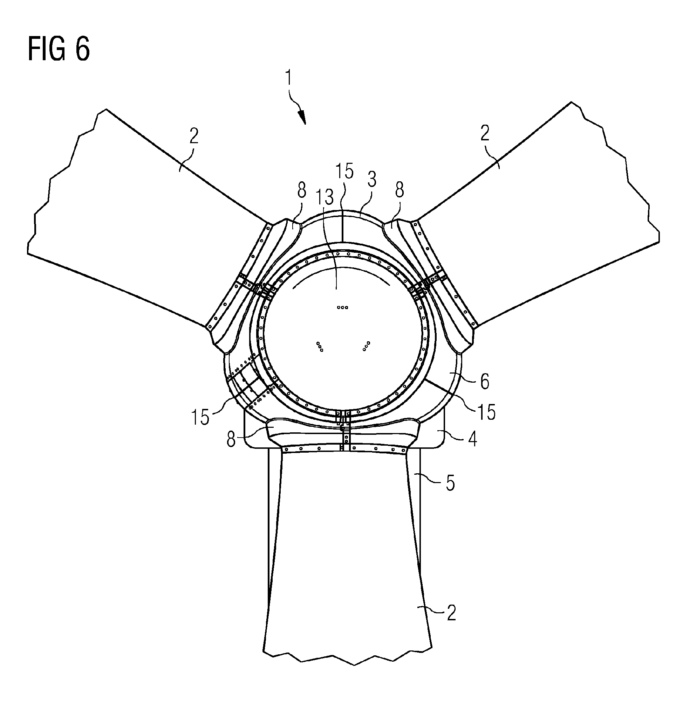

Figur 6 eine zweite Ansicht der Windenergieanlage.

Figur 6 zeigt eine zweite Ansicht der Windenergieanlage 1. Der Blick ist hier auf das Ende 11 bzw. Die Abdeckung 13 der Rotornabe 7 gerichtet. Die Rotornabe 3 zeigt eine Rotornabenverkleidung 6. Die Rotornabe ist an der Kanzel 4 der Windkraftanlage befestigt. Die Kanzel 4 ist auf einem Turm 5 angeordnet. Drei Rotorblätter 2 sind an der Rotornabe 7 befestigt.

Die Darstellung in den Figuren zeigt eine schematische Form der Erfindung. Ähnliche oder gleiche Elemente in den Darstellungen sind mit den gleichen Bezugszeichen versehen.

Auch wenn die Erfindung im Detail und mit Bezug auf eine bevorzugte Ausführungsform beschrieben wurde, ist die Erfindung nicht auf die dargestellten Beispiele beschränkt. Zahlreiche zusätzliche Variationen und ähnliche Ausführungen können vom Fachmann vorgenommen werden, ohne den Bereich der Offenbarung der Ansprüche zu überschreiten.

Es wird außerdem angemerkt, dass "ein" bzw. "eine" im Rahmen dieses Texts die Mehrzahl nicht ausschließt, sondern ein/eine aus einer Vielzahl bezeichnen kann. Außerdem schließt die Verwendung von "beinhalten" nicht aus, dass weitere nicht genannte Elemente, Inhaltsstoffe oder Schritte in der Vorrichtung oder im Verfahren enthalten sein können.

Auch Elemente die in Zusammenhang mit unterschiedlichen Ausführungsformen beschrieben wurden, können in Kombination auftreten. Die Bezugszeichen in den Ansprüchen dienen der Illustration der Erfindung und beschränken nicht den Inhalt der Ansprüche.

## Patentansprüche

1. Rotornabe einer Windkraftanlage (1),
- wobei die Rotornabe (3) mindestens zwei Verbindungsstellen (8) zur Aufnahme jeweils eines Rotorblatts (2) beinhaltet,
- wobei die Rotornabe (7) von einer Verkleidung (6) umgeben ist,
- wobei die Verkleidung (6) mindestens zwei Aussparungen (14) für jeweils ein Rotorblatt (12) aufweist,
**dadurch gekennzeichnet, dass**
- zwischen den zwei Verbindungsstellen (8) zur Aufnahme der Rotorblätter (2) der Abstand zwischen der Rotornabenverkleidung (6) und der Rotornabe (7) so gestaltet ist, dass zwischen Rotornabenverkleidung (6) und Rotornabe (7) ein Hohlraum entsteht, der groß genug ist, damit von dort aus Wartungsarbeiten an der Verbindungsstelle zwischen Rotorblatt (2) und Rotornabe (7) von einem Arbeiter durchführbar sind.

2. Rotornabe einer Windkraftanlage (1) nach Anspruch 1, **dadurch gekennzeichnet dass** die Rotorblätter (2) mittels Befestigungsmitteln an der Rotornabe (7) angebracht sind, und dass die Befestigungsmittel vom Hohlraum zwischen Rotornabe (7) und Rotornabenverkleidung (6) aus zugänglich sind.

3. Rotornabe einer Windkraftanlage (1) nach Anspruch 1, **dadurch gekennzeichnet dass** die Rotorblätter (2) über Lager mit der Rotornabe (7) verbunden sind, und dass die Lager vom Hohlraum zwischen Rotornabe (7) und Rotornabenverkleidung (6) aus zugänglich sind.

4. Rotornabe einer Windkraftanlage (1) nach einem der vorherigen Ansprüche, **dadurch gekennzeichnet dass** für einen Arbeiter der Hohlraum zwischen Rotornabenverkleidung (6) und Rotornabe (7) von dem Ende (11) der Rotornabe (7) aus zugänglich ist, das dem Ende (10) entgegengesetzt ist, das zur Befestigung an einer Kanzel (4) einer Windkraftanlage (1) vorgesehen ist.

5. Rotornabe einer Windkraftanlage (1) nach einem der vorherigen Ansprüche, **dadurch gekennzeichnet dass** der Abstand zwischen der Rotornabenverkleidung (6) und der Rotornabe (7) mit abnehmendem Abstand zu einer Verbindungsstelle (8) zur Aufnahme eines Rotorblattes (12) geringer wird.

6. Rotornabe einer Windkraftanlage (1) nach einem der vorherigen Ansprüche, **dadurch gekennzeichnet dass** die Rotornabe (7) eine Rotationsachse (16) aufweist, und dass die Rotornabenverkleidung (6) an dem Ende (11) einen kreisförmigen Querschnitt um die Rotationsachse (16) aufweist, das dem zur Befestigung an einer Kanzel (4) einer Windkraftanlage (1) vorgesehen Ende (10) der Rotornabe (7) entgegengesetzt ist.

7. Rotornabe einer Windkraftanlage (1) nach einem der vorherigen Ansprüche, **dadurch gekennzeichnet dass** der Querschnitt der Rotornabenverkleidung (6) an den axialen Enden (10, 11) der Rotornabenverkleidung (6) kreisförmig ist.

8. Rotornabe einer Windkraftanlage (1) nach einem der Ansprüche 6 oder 7, **dadurch gekennzeichnet dass** zwischen der Form der Rotornabenverkleidung (6) an den axialen Enden (10, 11) der Rotornabe (7) und der Form der Oberfläche der Rotornabe (7) zwischen den Verbindungsstellen (8) zur Aufnahme der Rotorblätter (2) ein kontinuierlicher Übergang ausgebildet ist.

9. Rotornabe einer Windkraftanlage (1) nach einem der vorherigen Ansprüche, **dadurch gekennzeichnet dass** die Rotornabe (7) drei Verbindungsstellen (8) zur Aufnahme eines Rotorblatts (2) beinhaltet.

10. Rotornabe einer Windkraftanlage (1) nach Anspruch 9, **dadurch gekennzeichnet dass** die Rotornabenverkleidung (6) Aussparungen (14) für drei Rotorblätter (2) aufweist.
